# EUROPEAN PATENT SPECIFICATION

(11) **EP 1 650 468 B1**
(45) Date of publication and mention of the grant of the patent: **09.04.2008**
(21) Application number: 05028023.9
(22) Date of filing: 06.10.2003
(51) Int. Cl.: F16F 9/32, F16F 9/14, B29C 65/08

(54) **An ultrasonically-welded hinge damper**
Ein ultraschallgeschweisster Rotationsdämpfer
Un amortisseur rotatif soudé par ultrasons

(30) Priority: 15.10.2002 US 417952 P; 04.09.2003 US 655560
(43) Date of publication of application: 26.04.2006
(62) Divisional of application: 03256285.2
(73) Proprietor: ILLINOIS TOOL WORKS INC., Glenview, Cook County, Illinois 60025 (US)
(72) Inventor: Anton, Jamison J, Crete Illinois 60417 (US); Levey, Kenneth R, West Chicago Illinois 60185 (US); Bivens, Steven L., Kankakee Illinois 60901 (US); Doornbos, David A., Manteno Illinois 60950 (US); Bella, Joseph J., Frankfort IL 60423 (US)
(74) Representative: Finnie, Peter John

(56) References cited:
- US-A- 4 691 811
- US-B1- 6 298 960

## Description

The present invention relates generally to high-torque movement dampers having a viscous fluid contained in a hermetically sealed chamber, and to structures forming the sealed chamber

A variety of assemblies use movement dampers to control the movement of assembly components. For example, in furniture and cabinetry it is known to use dampers for controlling movement of a drawer or door in at least one direction. In automobiles, it is known to use dampers on glovebox and console doors, and the like.

A known damper design provides rotational resistance to a gear, hinge or other rotating component on a mechanism such as an automatic closer through driving engagement between the component of the mechanism and a shaft of the damper. Resistance to rotation of the shaft in the damper is thereby imparted to rotation of the mechanism, for controlling operation of the mechanism. In some assemblies, the torque resistance requirement for the damper is high, and the space available in which to install the damper is small, or at least desirably is small.

Dampers of the type described are known to include a rotor rotatably held in a hermetically sealed housing. A shaft of the rotor projects outwardly from the housing, and may include a gear or other coupling by which the damper is connected to the component for which movement control is required. Resistance to rotation of the rotor is provided by a viscous fluid contained in a chamber within the housing flowing through compartments the volumes of which change as the rotor turns.

For continued, effective operation of the damper, the chamber defined by the housing must be hermetically sealed, to eliminate leakage of the viscous fluid. Any leakage adversely impacts damper performance. In high-torque dampers, assembly must be precise to ensure that performance is consistent from one damper to the next. Even a slight variation in assembly, with only a small deviation from design limits for a space in which the damping fluid flows can have a significant and unacceptable increase or decrease in the torque performance of the damper.

It is known to form the housing from two components, including a first component defining the majority of the chamber for the viscous fluid, and a cover or cap for the housing. The cover defines an opening for the rotor shaft. During assembly of the damper, the viscous fluid is dispensed into the housing. The rotor is positioned in the housing, with the shaft of the rotor extending through the cover. An o-ring seals the opening in the cover around the rotor shaft, and the cover is connected to the housing in a manner intended to seal the connection against leakage of the damper fluid. Surfaces in the housing and in the cover are sealed against each other, to seal the chamber.

Known techniques for connecting the housing and cover include snap fits and ultrasonic welding. Snap fit components are relatively wide, and compress a thick seal therebetween. Frictional resistance to assembly is high, and snap fits provide less consistency in hermetic seal formation between the housing and cover. Failures occur if the components are not pressed together adequately.

Known ultrasonic welding techniques use a tongue-and-groove relationship between the cover and housing (for example,see US-B1-6298960). The housing and cover are required to be wide to accommodate the tongue and groove structures, and only a single energy director is provided. As a result, welding can be somewhat unreliable and inconsistent. Resulting damper torque performance can vary from one damper to another due to the inability to reliably control weld depth, and the dimensional distortion that can occur in the assembly. As a result, ultrasonically welded joints often also incorporate compressed seals at the joint to prevent leakage. This further increases damper size and cost.

Compact dampers requiring minimal space are desirable. In some assemblies, it is further desirable that resistance or "damping" be greater in one rotational direction of the rotor than in the opposite rotational direction.

What is needed in the art is a damper that is easier and less costly to assemble, more reliable and consistent in operation than are known designs, and provides different resistance to rotation in one direction than in the opposite direction.

One embodiment of the present invention provides a high torque damper with internal flow ports that are opened and closed during use to provide different torque performance, and a housing and cover secured to each other by ultrasonic welding at a specially configured joint that promotes proper alignment and adequate sealing.

The invention provides a viscous fluid damper comprising:
a housing having an opening and a substantially cylindrical wall;
a cover over said opening, said cover including a flange slidable into said housing along said cylindrical wall;
a rotor rotatably disposed in said housing, said rotor extending outwardly of said housing through said cover, said rotor including a flange;
a seal positioned on said flange of said rotor between said rotor and said flange of said cover; and
a v-shaped channel disposed in said housing and a ring disposed on said cover, said channel having walls defining said channel, and said ring being rectangular in cross-section and including edges received against said walls, opposite edges of said ring being suitable for functioning as energy directors for ultrasonic welding of said cover to said housing.

An advantage of the present invention is providing a viscous damper that is easily and consistently assembled.

Another advantage of the present invention is providing a viscous damper that is reliable and sturdy, and that has tightened torque tolerances compared with known dampers.

A still further advantage of the present invention is providing an assembly process for viscous dampers that is easy to perform, reduces scrap and produces dampers that perform consistently.

Yet another advantage of the present invention is providing a high torque damper with different torque performance in one direction than in another.

A yet further advantage of the present invention is providing a viscous damper having components that are easy to design and mold from thermoplastic materials.

A particular embodiment in accordance with the invention will now be described with reference to the accompanying drawings; in which:-
Fig. 1 is a perspective view of a damper in accordance with the present invention;
Fig. 2 is an exploded, perspective view of the damper shown in Fig. 1;
Fig. 3 is an end view of the housing of the damper;
Fig. 4 is a cross-sectional view of the damper, showing the welded joint between the cover and housing;
Fig. 5 is a cross-sectional view showing the internal valve of the damper in a closed position;
Fig. 6 is a cross-sectional view showing the internal valve of the damper in an opened position;
Fig. 7 is an enlarged view of a collar portion of the rotor in the damper; and
Fig. 8 is a cross-sectional view similar to Fig. 4 but illustrating the cover and housing at an intermediate stage of assembly, before the cover is welded to the housing.

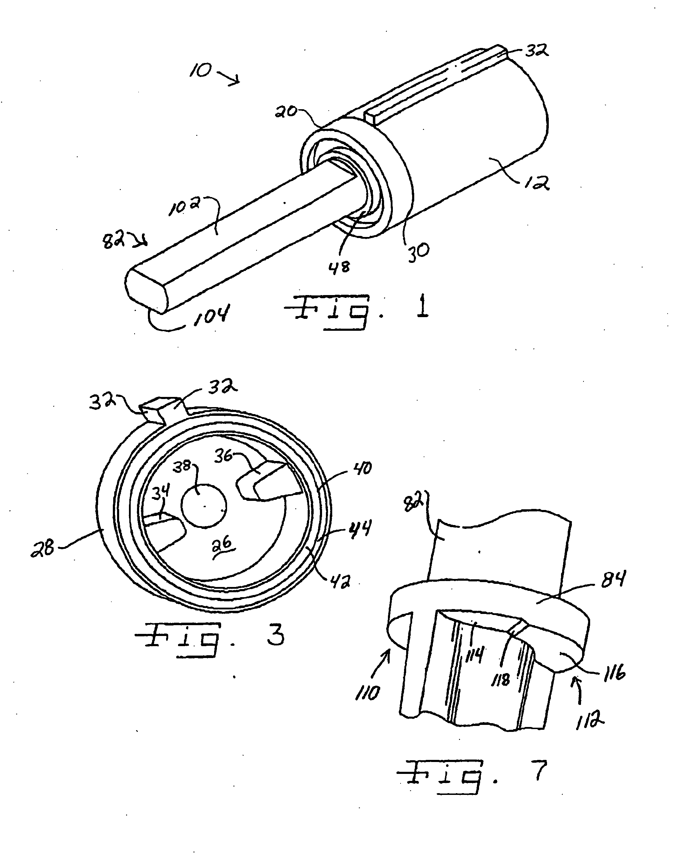

Referring now more specifically to the drawings, and to Fig. 1 in particular, numeral 10 designates a damper of the present invention, which can be used for controlling the movement of a device (not shown), which maybe a drawer, a door or the like in appliances, furniture, automobiles or other devices. It is anticipated that damper 10 of the present invention will have a wide range of uses and applications, and should not be interpreted as being limited to the few applications and uses provided as examples herein. Also, the use herein of terms such as "bottom", "top", etc. are only for purposes of description with respect to the orientation shown in the drawings. Damper 10 can be used in a variety of orientations including those in which such components are above others.

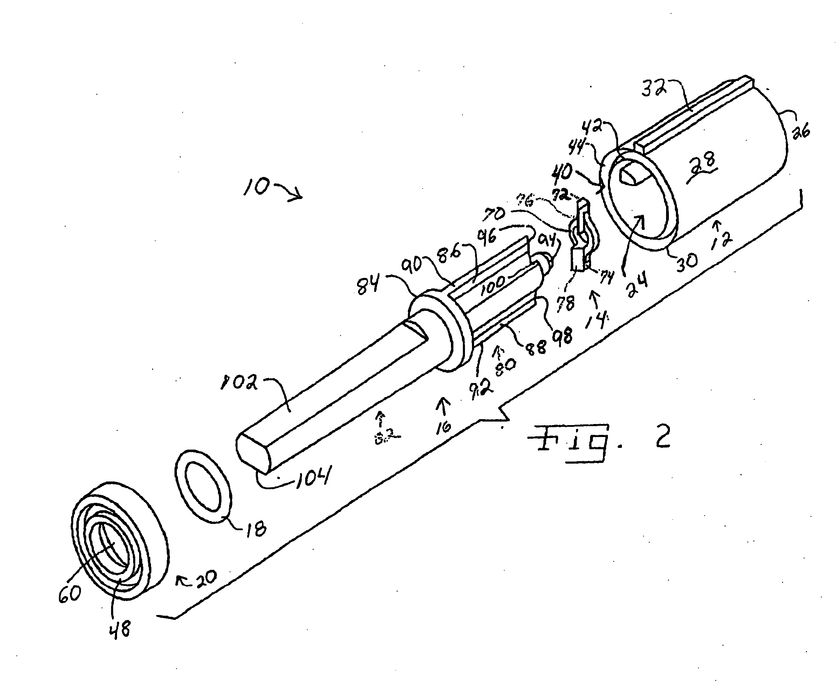

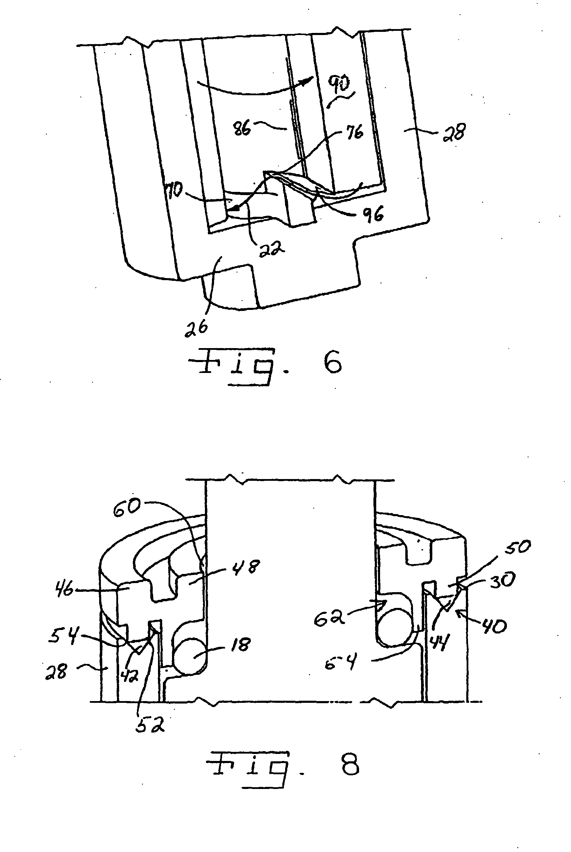

As best seen in the exploded view of Fig. 2, damper 10 includes a housing 12, a valve 14, a rotor 16, an 0-ring 18 and a cover 20. A damping fluid is contained within damper 10, as well known to those skilled in the art. An indication of one flow stream of damping fluid within damper 10, to be described hereinafter, is indicated by arrow 22 in Fig. 6.

Housing 12 defines a chamber 24 having a closed base or first end 26, a substantially cylindrical side 28 and an open second end 30 opposite first end 26. Cover 20 is provided as a closure for open second end 30 of housing 12. Housing 12 and cover 20 thereby are first and second components defining an enclosed volume therebetween for chamber 24. One or more tabs or fixtures 32 can be provided on housing 12, one such fixture 32 being shown in the drawings. Fixture or fixtures 32 are provided for securing housing 12 in a device (not shown). Those skilled in the art will understand readily that other structures, devices and attaching systems can be used.

Housing 12 further includes internal ribs 34 and 36 (Fig. 3) extending inwardly in chamber 24 from cylindrical side 28. Ribs 34 and 36 are directly opposite and spaced from each other in chamber 24 and are joined to an inner surface of base 26, which further defines a depression 38 therein. Second end 30 of cylindrical side 28 forms a v-shaped channel 40 (Fig. 8) defined by inner and outer channel walls 42 and 44, respectively.

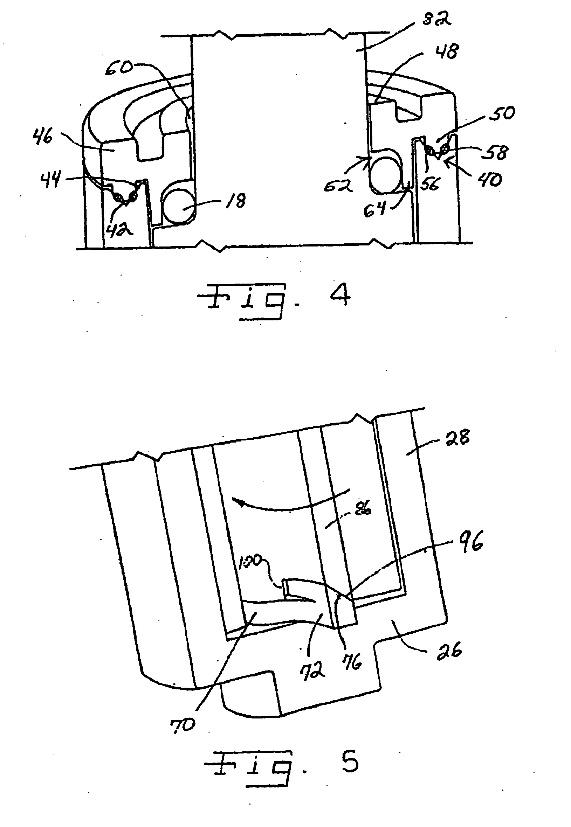

Cover 20 defines an annular outer rim 46 and a central dome 48. Rim 46 defines a ring 50 on the side of cover 20 that faces housing 12 (Figs. 4 and 8). Ring 50 is substantially rectangular in cross-section, and is adapted, arranged and sized to be received in v-shaped channel 40 of cylindrical side 28. Opposite edges 52 and 54 of ring 50 contact channel walls 42 and 44, respectively, and function as energy directors for ultrasonic welding of cover 20 to housing 12 along two circular and continuous beads 56 and 58 shown in Fig. 4. Alternatively, although not shown, ring 50 and channel 40 (or walls 42 and 44) could be made flat so as to allow the cover 20 to be laser welded to the housing.

Central dome 48 of cover 20 surrounds a central opening or hole 60 in cover 20 and provides a bowl-like interior region 62. A flange 64 on the inner side of cover 20 inwardly from ring 50 extends along a portion of side 28 in the assembled damper 10. Rotor 16, to be described in more detail hereinafter, is disposed within chamber 24 and extends outwardly from housing 12 and cover 20, through hole 60. 0-ring 18 is disposed and seated on rotor 16, and is further seated against cover 20 in bowl-like interior region 62 of cover 60 to provide a seal against leakage of damping fluid from chamber 24.

Valve 14 (Fig. 2) includes a substantially annular base 70 and substantially diametrically disposed, outwardly extending wings 72 and 74 defining angular valve faces 76 and 78, respectively.

Rotor 16 is disposed partially within chamber 24, and is rotatable about its own longitudinal axis. Rotor 16 includes a first portion 80 substantially contained within chamber 24, and a second portion 82 extending outwardly from housing 12, through hole 60 in cover 20. Rotation of rotor 16 in chamber 24 is retarded or inhibited by operation of the damping fluid in chamber 24. As those skilled in the art will understand readily, the damping fluid flow within chamber 24 determines the torque performance of damper 10, and the viscosity of the fluid and the gap between components of rotor 16, valve 14 and chamber 24 influence damping fluid flow.

Advantageously, rotor 16 is formed as a one-piece, monolithic structure including first portion 80 and second portion 82. A flange 84 or other ledge-like configuration is provided at the transition from first portion 80 to second portion 82. 0-ring 18 is disposed around second portion 82, substantially on flange 84 and within bowl-like region 62. In the assembled damper 10, o-ring 18 provides a fluid-tight seal against both rotor 16 and cover 20 so that damping fluid is contained within chamber 24 and does not leak from hole 60.

First portion 80 is cooperatively shaped in association with chamber 24 and valve 14 to experience the desired damping effect to the rotation thereof from the resistance provided from the fluid contained and flowing in chamber 24 as rotor 16 rotates. The associated relationship between rotor 16 and valve 14 creates greater rotational resistance in one direction of rotation than in the other direction of rotation, as will be described.

First portion 80 fits closely within chamber 24, and may be of different configurations to achieve the desired damping effect. As shown, first portion 80 includes opposed, outwardly extending paddles 86 and 88. Outer edges 90, 92 of paddles 86 and 88 fit closely against or near cylindrical side 28 to control flow of fluid between paddles 86, 88 and housing 12. As used herein, "control" of damping fluid flow is understood to mean limiting the flow to a desired amount as well as effectively eliminating the flow of damping fluid, as desired.

The inner-most end of rotor 16 defines an axially positioned stub shaft or pin 94 that extends through annular base 70 of valve 14 and is received in depression 38 of base 26. Valve 14 and rotor 16 are rotatable relative to each other at pin 94, within physical restrictions. Innermost ends of paddles 86 and 88 define angular valve faces 96, 98 complementary to valve faces 76 and 78 on valve 14. A central abutment 100 is provided to engage wings 72 and 74, thereby limiting the relative rotation of valve 14 and rotor 16.

Second portion 82 is advantageously shaped for connection to the device on which damper 10 is to operate. In the exemplary embodiment, second portion 82 is configured substantially as a shaft projecting from housing 12 in the assembled damper 10, the shaft having flattened sides 102 and 104. However, it should be understood that second portion 82 can be configured in different ways to accommodate connection to the device or thing upon which damper 10 will operate.

In assembly of damper 10, valve 14 and rotor 16 are assembled, with pin 94 extending through annular base 70. Valve faces 76 and 78 of valve 14 are positioned adjacent valve faces 96 and 98 of rotor 16, respectively. Rotor 16 with valve 14 thereon is placed in housing 12, with paddles 86 and 88 positioned between ribs 34 and 36. Pin 94 is positioned in depression 38, and valve 14 rests against bottom 26 of housing 12. Chamber 24 is filled with damping fluid. 0-ring 18 and cover 20 are placed over rotor second portion 82, and the assembly is pressed together, compressing O-ring 18 into sealing position. As cover 20 engages housing 12, flange 64 slides into cylindrical side 28 and rectangular ring 50 settles into v-shaped channel 40. With pin 94 held in depression 38, positioning rotor first portion 80 in chamber 24, and rotor second portion 82 held by cover 20 which is positioned by flange 64 in cylindrical side 28 and by ring 50 in v-shaped channel 40, the assembly of damper 10 is substantially self-centering (Fig. 8). Edges 52 and 54 engage channel walls 42 and 44, respectively, and serve as energy directors for ultrasonic welding of cover 20 to housing 12. Beads of weld 56 and 58 are formed along the areas that edges 52 and 54 engage channel walls 42 and 44, to form a strong, fluid tight bond between cover 20 and housing 12. It should be understood that other welding techniques, such as laser welding, also can be used.

During use of damper 10, when rotor 16 is rotated in a clockwise direction as shown in Fig. 5, valve faces 76 and 78 of valve 14 seat against valve faces 96 and 98 of rotor 16, respectively. With no opening between valve 14 and rotor 16, damping fluid does not flow between valve 14 and rotor 16. Valve 14 rotates with rotor 16, and wings 72 and 74 function essentially as extensions of paddles 86 and 88. As paddles 86 and 88 sweep through chamber 24, the volumes change in spaces defined on opposite sides thereof between ribs 34, 36 and each paddle 86 and 88. Damping fluid can flow from one space to another only between ribs 34, 36 and rotor 16, or between an inner portion of cylindrical side 28 and outer edges 90 and 92 of paddles 86 and 88. By closely controlling the dimensions of each component, the damping effect created by damper 10 is controlled.

When rotor 16 is rotated counter-clockwise as shown in Fig. 6, the drag of valve 14 against bottom 26 and the resistance from damping fluid in chamber 24 slow the movement of valve 14 relative to rotor 16. Valve faces 96 and 98 separate from valve faces 76 and 78. The opening between valve 14 and rotor 16 creates additional paths 22 for damping fluid flow as paddles 86 and 88 sweep through chamber 24, changing the volume of spaces defined on opposite sides thereof between ribs 34, 36 and each paddle 86 and 88. The relative rotation between valve 14 and rotor 16, and consequently the size of the opening defining flow paths 22, is limited by one or more abutments 100 engaged by the backs of wings 72 and 74. With the additional flow paths 22 created, the resistance to movement of rotor 16 is less, and damper 10 thereby provides less damping effect when rotor 16 is rotated counter-clockwise then when rotor 16 is rotated clockwise.

The difference in damping effect for rotation in one direction as compared with rotation in the opposite direction can be used advantageously for many devices in which it is desirable to have movement more difficult in one direction then in another. It can be employed advantageously also in devices where the weight of the device provides influence as well. For example, with a door hinged at the top to open upwardly, less damping effect may be desired for opening, when the weight of the door must be lifted, and more damping effect may be needed for closing, when the weight of the door naturally urges the door closed.

Fig. 7 illustrates another embodiment of the invention which provides different damping effects from rotation in opposite directions. Flange 84 has shaped surfaces 110 and 112 on the side thereof facing ribs 34 and 36 in chamber 24.

Each surface 110 and 112 includes a more distant surface 114 and a more near surface 116 with respect to ribs 34 and 36. A ramp 118 connects surfaces 114 and 116. Thus, it can be seen that spaces between ribs 34, 36 and surfaces 110, 112 are decreasing and/or closed when rotor 16 is rotated in one direction, and are opened or increasing when rotor 16 is rotated in the opposite direction. Differing paths for the flow of damping fluid are created between surfaces 110, 112 and ribs 34, 36. Those skilled in the art will understand that the features of the embodiment shown in Fig. 7 can be used in place of or in addition to the use of valve 14 as described previously. It is possible to position and shape surfaces 110 and 112 relative to the orientation and operation of valve 14 such that both open and close substantially simultaneously to create an increased torque difference. It also is possible to position and shape surfaces 110 and 112 relative to the orientation and operation of valve 14 such that openings created by each are sequential, providing a stepped change as the damper moves from the greatest damping effect to the least damping effect, and vice-versa.

The present invention provides a high torque viscous damper that is easy to assemble and align properly for consistent performance. Through internal valves, the damper provides greater resistance when rotated in one direction than when rotated in the opposite direction.

## Claims

1. A viscous fluid damper (10) comprising:
a housing (12) having an opening (30) and a substantially cylindrical wall (28);
a cover (20) over said opening, said cover including a flange (64) slidable into said housing along said cylindrical wall;
a rotor (16) rotatably disposed in said housing, said rotor extending outwardly of said housing through said cover, said rotor including a flange (84);
a seal (18) positioned on said flange of said rotor between said rotor and said flange of said cover; and
a v-shaped channel (44) disposed in said housing and a ring (50) disposed on said cover, said channel having walls (42,44) defining said channel, and said ring being rectangular in cross-section and including edges (52,54) received against said walls, opposite edges of said ring being suitable for functioning as energy directors for ultrasonic welding of said cover to said housing.

2. The viscous fluid damper (10) of claim 1, said cover (20) ultrasonically welded to said housing (12) along said ring edges (52,54) received against said channel walls (42,44).

3. The viscous fluid damper (10) of claim 1 or 2, said rotor (16) including an end, and said housing (12) including a base (26) defining a depression (38), said end (94) of said rotor being disposed in said depression in said base.

## Patentansprüche

1. Viskosedämpfer (10), der Folgendes umfasst:
ein Gehäuse (12) mit einer Öffnung (30) und einer im Wesentlichen zylindrischen Wand (28);
eine Abdeckung (20) über der Öffnung, wobei die Abdeckung einen Flansch (64) enthält, der entlang der zylindrischen Wand in das Gehäuse verschiebbar ist;
einen drehbar in dem Gehäuse angeordneten Rotor (16), wobei sich der Rotor durch die Abdeckung von dem Gehäuse nach außen erstreckt und einen Flansch (84) enthält;
eine am Flansch des Rotors zwischen dem Rotor und dem Flansch der Abdeckung positionierte Dichtung (18); und
einen im Gehäuse angeordneten V-förmigen Kanal (44) und einen an der Abdeckung angeordneten Ring (50), wobei der Kanal Wände (42, 44) aufweist, die den Kanal definieren, und der Ring einen rechteckigen Querschnitts aufweist und Ränder (52, 54) enthält, die an den Wänden aufgenommen werden, wobei einander gegenüberliegende Ränder des Rings als Energierichtungsgeber zum Ultraschallschweißen der Abdeckung an das Gehäuse fungieren können.

2. Viskosedämpfer (10) nach Anspruch 1, wobei die Abdeckung (20) durch Ultraschallschweißen entlang den an den Kanalwänden (42, 44) aufgenommenen Ringrändern (52, 54) mit dem Gehäuse (12) verbunden ist.

3. Viskosedämpfer (10) nach Anspruch 1 oder 2, wobei der Rotor (16) ein Ende enthält und das Gehäuse (12) eine eine Vertiefung (38) definierende Basis (26) enthält, wobei das Ende (94) des Rotors in der Vertiefung in der Basis angeordnet ist.

## Revendications

1. Amortisseur à fluide visqueux (10) comportant :
un boîtier (12) présentant une ouverture (30) et une paroi (28) sensiblement cylindrique ;
un couvercle (20) par-dessus ladite ouverture, ledit couvercle comprenant un flasque (64) susceptible d'entrer dans ledit boîtier en coulissant le long de ladite paroi cylindrique ;
un rotor (16) disposé de façon tournante dans ledit boîtier, ledit rotor s'étendant vers l'extérieur dudit boîtier à travers ledit couvercle, ledit rotor comprenant un flasque (84) ;
un joint (18) disposé sur ledit flasque dudit rotor entre ledit rotor et ledit flasque dudit couvercle ; et
un canal (44) en V disposé dans ledit boîtier et une bague (50) disposée sur ledit couvercle, ledit canal présentant des parois (42, 44) définissant ledit canal et ladite bague étant de section droite rectangulaire et comprenant des bords (52, 54) logés contre lesdites parois, des bords opposés de ladite bague étant appropriés pour servir de directeurs d'énergie en vue du soudage par ultrasons dudit couvercle audit boîtier.

2. Amortisseur à fluide visqueux (10) selon la revendication 1, ledit couvercle (20) étant soudé par ultrasons audit boîtier (12) le long desdits bords (52, 54) de la bague logés contre lesdites parois (42, 44) du canal.

3. Amortisseur à fluide visqueux (10) selon la revendication 1 ou 2, ledit rotor comprenant une extrémité, et ledit boîtier (12) comprenant une embase (26) définissant une cuvette (38), ladite extrémité (94) dudit rotor étant disposée dans ladite cuvette de ladite embase.
